# EUROPÄISCHE PATENTANMELDUNG

(11) **EP 0 799 921 A2**
(43) Veröffentlichungstag der Anmeldung: **08.10.1997**
(21) Anmeldenummer: 97104968.9
(22) Anmeldetag: 24.03.1997
(51) Int. Cl.: D03D 1/02, B60R 21/16

(54) **Gewebe zur Herstellung eines Airbags**

(30) Priorität: 25.03.1996 DE 19611737
(71) Anmelder: UTT Technische Textilien GmbH & Co., 86381 Krumbach (DE)
(72) Erfinder: Nelle, Joachim, 89179 Beimerstetten (DE); Huber, Norbert, 86381 Krumbach (DE)
(74) Vertreter: Füchsle, Klaus, Dipl.-Ing.

(57) **Zusammenfassung**

Ein Gewebe zur Herstellung eines Airbags besteht aus synthetischen Garnen, die in Schußrichtung und in Kettrichtung verlaufen. Das Gewebe ist dadurch gekennzeichnet, daß das Garn in Schußrichtung einen gröberen Nenntiter aufweist als das Garn in Kettrichtung. Die Garne sind aus einem Titerbereich von dtex 235 bis dtex 940 ausgewählt und das Gewebe besitzt im wesentlichen gleiche Werte für die mechanischen Eigenschaften, wie Höchstzugkraft, Höchstzugkraftdehnung und Weiterreißkraft, in Kettrichtung wie in Schußrichtung. Hierdurch kann ein Airbag aus dem oben beschriebenen Gewebe kostengünstiger hergestellt werden.

## Beschreibung

Die Erfindung betrifft ein Gewebe aus synthetischen Garnen nach dem Oberbegriff des Patentanspruchs 1.

Zur Herstellung von Airbags zum Schutz von Fahrzeuginsassen werden in der Technik Gewebe eingesetzt, die zum einen eine definierte Luftdurchlässigkeit und zum anderen symmetrische mechanische Eigenschaften besitzen, d. h. mechanische Eigenschaften, die für die Kett- und Schußrichtung auf nahezu gleichem Niveau liegen.

Die Luftdurchlässigkeit stellt das Hauptkriterium bei der Auswahl eines Airbag-Gewebes dar und ist je nach Einsatzzweck definiert als
- luftundurchlässig (< 10 l/dm² x min)
- luftdurchlässig (> 10 l/dm² x min).

Bei der Verwendung eines Gewebes mit einem Nenntiter von Kette und Schuß von jeweils dtex 470 liegen im Gewebe 21 bis 22 Fäden/cm Kette bzw. Schuß. Daher ist die Herstellung des Gewebes mit relativ hohen Kosten verbunden. Die Verwendung eines Gewebes mit einem gröberen Nenntiter von Kette und Schuß, beispielsweise von dtex 700, führt zu einem höheren Gewicht und zu einer schlechteren Faltbarkeit des Gewebes. Hierdurch wird das Packvolumen größer und das Modul im Lenkrad zur Unterbringung des Airbags muß größer gestaltet werden. Daher wird der Vorteil einer geringeren Anzahl von Fäden/cm Kette bzw. Schuß und des daraus resultierenden Kostenvorteils durch eine schlechtere Handhabbarkeit des Gewebes erkauft.

Das der Erfindung zugrundeliegende Problem besteht somit darin, ein Gewebe für einen Airbag zur Verfügung zu stellen, das bei gleichbleibenden technischen Eigenschaften kostengünstiger herzustellen ist.

Diese Aufgabe wird durch ein Gewebe zur Herstellung eines Airbags mit den Merkmalen des Patentanspruchs 1 gelöst.

Das erfindungsgemäße unbeschichtete Gewebe ist bei gleichbleibenden mechanischen Eigenschaften im Vergleich zu einem Gewebe mit gleichem Nenntiter in Kett- und Schußrichtung kostengünstiger herzustellen. Dies wird dadurch erzielt, daß die Anzahl von Fäden pro Zentimeter eines Fadensystems gesenkt wird. Trotz dieser Maßnahme bleiben die mechanischen Festigkeitswerte Kette/Schuß symmetrisch, d.h. Hauptmerkmale wie
- Höchstzugkraft nach DIN 53857 (klimatisiert sowie nach Wärme- und Feuchtealterung),
- Höchstzugkraftdehnung nach DIN 53857 (klimatisiert sowie nach Wärme- und Feuchtealterung),
- Weiterreißkraft nach DIN 53859 (klimatisiert sowie nach Wärme- und Feuchtealterung),
weisen sowohl in Kett- als auch in Schußrichtung Werte auf nahezu gleichem Niveau auf.

Ein Airbag aus dem erfindungsgemäßen Gewebe besitzt somit folgende Vorteile. Zunächst besteht eine Kostenersparnis bei der Herstellung des verwendeten Gewebes im direkten Vergleich zwischen dem Standardgewebe und dem erfindungsgemäßen Mischgewebe. Beispielsweise sind die Kosten bei einem Gewebe mit Kette dtex 235 und Schuß dtex 470 geringer als bei einem reinen dtex 235 Gewebe, während ein Vergleich zwischen einem reinen dtex 700 Gewebe und einer Mischung dtex 235/ dtex 470 nicht gezogen werden kann. Desweiteren können technische Eigenschaften optimiert werden, die im gröberen Titerbereich als nicht ideal einzustufen sind, wie z.B die Nahtfestigkeiten. Schließlich besitzt das erfindungsgemäße Mischgewebe im direkten Vergleich zum Standardgewebe eine verbesserte Faltbarkeit und ein verringertes Packvolumen. Hierdurch kann beispielsweise das Modul im Lenkrad des Kraftfahrzeuges, in das ein Airbag eingelegt wird, kleiner gestaltet werden.

Die Luftdurchlässigkeit entspricht den vorgegebenen Werten und es lassen sich Gewebe mit unterschiedlichem Nenntiter in Kett- und Schußrichtung herstellen, die einen verbesserten Griff zeigen.

Nach einer bevorzugten Ausführungsform ist das Gewebe zur Herstellung eines Airbags in einer der folgenden Bindungen erstellt: Leinwand, Rips, Panama, sämtliche Koeper-Kreuzkoeper- und Atlasvarianten.

Vorzugsweise werden die Garne aus einem Titerbereich von dtex 235 bis dtex 940 ausgewählt. Selbstverständlich sind auch innerhalb dieses Bereichs beliebige Zwischentiter denkbar.

Die verschiedenen Bindungsarten und angegebenen Titerbereiche werden je nach späterem Verwendungszweck des Gewebes zur Herstellung eines Fahrer-, Beifahrer- oder Seitenairbags ausgewählt. Bei diesen jeweiligen Geweben sind unterschiedliche Luftdurchlässigkeiten wie auch Gewebefestigkeiten gefordert.

Vorzugsweise ist das synthetische Garn aus Polyamid 6, Polyamid 6.6 oder Polyamid 4.6 hergestellt. Diese Materialien verleihen dem Garn gute mechanische Festigkeitswerte, sind jedoch kostengünstig verfügbar. Andere mögliche Materialien für das Gewebe zur Herstellung eines Airbags sind Polyester oder Kevlar.

Nachfolgend wird die Erfindung an einem konkreten Ausführungsbeispiel erläutert.

Das Gewebe zur Herstellung eines Airbags besitzt in Schußrichtung ein Garn mit gröberem Titer als in Kettrichtung. So wird für die Kette ein Garn mit einem Nenntiter von dtex 470 und für den Schuß ein Garn mit einem Nenntiter von 700 eingesetzt. Die verwendeten Materialien sind jeweils Nylon 6.6. Durch die Verwendung des gröberen Titers in Schußrichtung wird die Schußdichte auf 14 Fäden pro Zentimeter Schuß gesenkt. Im Vergleich hierzu liegt die Kettdichte bei 20 Fäden pro Zentimeter Kette. Durch die geringere Schußdichte werden die Webkosten des Gewebes gesenkt und die Produktivität der Herstellung des verwendeten Gewebes erhöht. Das Gewebe ist in Leinwandbindung erstellt und besitzt die in der nachfolgenden Tabelle 1 dargestellten mechanischen Eigenschaften.

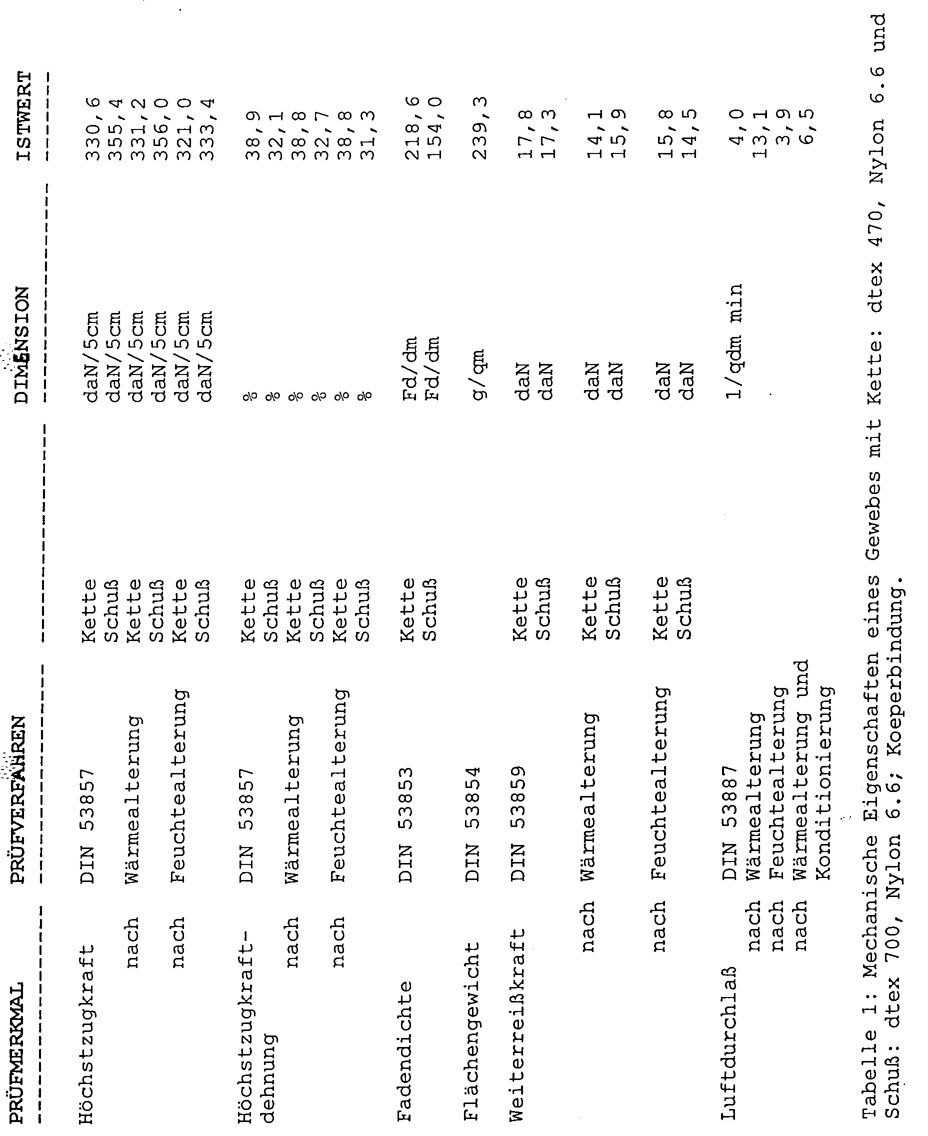

Aus der obigen Tabelle folgt, daß die nach DIN 53857 ermittelte Höchstzugkraft wie auch Höchstzugkraft nach Wärmealterung oder Feuchtealterung in Kettrichtung und in Schußrichtung etwa auf gleichem Niveau liegen. Unterschiede der gemessenen Höchstzugkräfte zwischen Kette und Schuß treten auch bei Geweben auf, bei denen Kette und Schuß aus Fäden mit gleichem Nenntiter bestehen.

Auch die Höchstzugkraftdehnung nach DIN 53587 sowie die Höchstzugkraftdehnung nach Wärmealterung oder nach Feuchtealterung ist in Kettrichtung wie auch in Schußrichtung im wesentlichem auf gleichem Niveau. Dies gilt ebenso für die experimentell bestimmte Weiterreißkraft nach dem Prüfverfahren in DIN 53859. Hierbei ergeben sich für die Weiterreißkraft wie auch die Weiterreißkraft nach einer vorgeschalteten Wärmealterung oder Feuchtealterung nahezu identische Werte.

Lediglich aus den Konstruktionsparametern, d.h. den Werten für die Fadendichte, die nach dem in DIN 53853 beschriebenen Prüfverfahren gemessen wurde, zeigen sich die deutlichen Unterschiede zwischen Kette und Schuß; die mechanischen Eigenschaften werden jedoch durch die Wahl verschiedener Garne für Kette und Schuß mit verschiedenem Nenntiter nur unwesentlich beeinflußt.

Das in Tabelle 1 beschriebene Gewebe besitzt die geforderte Luftdurchläßigkeit und gegenüber einem Gewebe mit einem Nenntiter von dtex 470 jeweils in Kett- und Schußrichtung einen verbesserten Griff. Das Gewebe zeichnet sich durch eine hervorragende Faltbarkeit aus, wodurch das Modul im Lenkrad zur Aufnahme des Airbag kleiner ausgeführt werden kann, als dies bei Verwendung eines Gewebes mit einem Nenntiter von dtex 470 oder dtex 700 jeweils in Kett- und Schußrichtung möglich wäre.

Neben dem oben genannten Ausführungsbeispiel einer Mischung von Kette dtex 470 und Schuß dtex 700 lassen sich innerhalb des Titerbereichs von dtex 235 bis dtex 940 auch andere sinnvolle Kombinationen der Nenntiter auswählen, die im direkten Vergleich zu Geweben, die denselben Nenntiter, allerdings in beiden Fadensystemen, aufweisen, zu einer kostengünstigeren Herstellung des Gewebes bei symmetrischen technischen Daten für Kette und Schuß führen. So könnte beispielsweise ein Gewebe mit Kette dtex 235 und Schuß dtex 350 hergestellt werden, das im Vergleich zu einem reinen dtex 235 Gewebe einen Kostenvorteil bietet.

Die Auswahl des Gewebes richtet sich nach dem späteren Verwendungszweck als Material zur Herstellung eines Fahrer-, Beifahrer- oder Seitenairbags, wobei diese verschiedenen Typen von Airbag unterschiedliche geforderte Luftdurchlässigkeiten wie auch Gewebefestigkeiten besitzen.

## Patentansprüche

1. Gewebe zur Herstellung eines Airbags aus synthetischen Garnen, mit einem Garn in Schußrichtung und einem Garn in Kettrichtung,
dadurch **gekennzeichnet,** daß
das Fadensystem in Schußrichtung einen gröberen Nenntiter aufweist als das Garn in Kettrichtung.

2. Gewebe zur Herstellung eines Airbags nach Anspruch 1,
dadurch **gekennzeichnet,** daß
das Gewebe in einer der folgenden Bindungen erstellt ist: Leinwand, Rips, Panama, sämtliche Koeper-, Kreuzkoeper- oder Atlasvarianten.

3. Gewebe zur Herstellung eines Airbags nach einem oder mehreren der vorhergehenden Ansprüche,
dadurch **gekennzeichnet,** daß
die Garne aus einem Titerbereich von dtex 235 bis dtex 940 ausgewählt sind.

4. Gewebe zur Herstellung eines Airbags nach einem der vorhergehenden Ansprüche,
dadurch **gekennzeichnet,** daß
das Gewebe im wesentlichen gleiche Werte für die mechanischen Hauptmerkmale, wie Höchstzugkraft, Höchstzugkraftdehnung und Weiterreißkraft, in Kettrichtung wie in Schußrichtung, besitzt.

5. Gewebe zur Herstellung eines Airbags nach einem der vorhergehenden Ansprüche,
dadurch **gekennzeichnet,** daß
die synthetischen Garne aus Polyamid 6, Polyamid 6.6 oder Polyamid 4.6 hergestellt sind.

6. Gewebe zur herstellung eines Airbags nach einem oder mehreren der vorhergehenden Ansprüche,
dadurch **gekennzeichnet,** daß
die Konstruktionsparameter für die Herstellung des Gewebes in Kette- und Schuß unterschiedlich sind.

7. Airbag aus einem Gewebe nach einem der vorhergehenden Ansprüche
